# EUROPÄISCHE PATENTANMELDUNG

(11) **EP 4 848 696 A1**
(43) Veröffentlichungstag der Anmeldung: **02.12.2026**
(21) Anmeldenummer: 26179906.8
(22) Anmeldetag: 20.05.2026
(51) Int. Cl.: H04L 67/12

(54) **VEDRAHTLOSEN ÜBERTRAGUNG VON DATEN IN EINEM MEHRSTUFIGEN HIERARCHISCHEN DRAHTLOSEN NETZWERK ENTHALTEND EINE VIELZAHL VON VERTEILT ANGEORDNETEN TEILNEHMERN**

(30) Priorität: 30.05.2025 DE 102025121250
(71) Anmelder: eQ-3 Holding GmbH, 26789 Leer (DE)
(72) Erfinder: Meyer, Hilko, 26632 Ihlow (DE)
(74) Vertreter: Gerstein, Hans Joachim

(57) **Zusammenfassung**

Ein Verfahren zur drahtlosen Übertragung von Daten in einem mehrstufigen hierarchischen drahtlosen Netzwerk zwischen Teilnehmern des Netzwerkes wird beschrieben, wobei ein übergeordnetes Niedrigenergie-Weitverkehrsnetz (LPWAN) zur Kommunikation mit einem anderen Teilnehmer, wie beispielsweise einem Server (SV), und ein untergeordnetes Peer-to-Peer-Netzwerk (P2P) zur Kommunikation von Teilnehmern des Netzwerkes untereinander vorhanden ist. Das Verfahren hat die Schritte:
a) Anmelden aller Teilnehmer des Netzwerkes an dem übergeordneten Niedrigenergie-Weitverkehrsnetz (LPWAN), das durch Austausch von Schlüsseln zur verschlüsselten Datenkommunikation abgesichert ist;
b) Festlegen von Teilnehmern als P2P-Master-Teilnehmer (MDn) für jeweils einen Knoten des untergeordneten Peer-to-Peer-Netzwerkes (P2P) und von Teilnehmern, die als unidirektionale Slave-Teilnehmer (SDn.m, UD-SDn.m) oder bidirektionale Slave-Teilnehmer (BD-SDn.m) einem P2P-Master-Teilnehmer (MDn) zur Datenübertragung in dem Peer-to-Peer-Netzwerk (P2P) zugeordnet sind;
c) Senden einer Nachricht durch einen P2P-Master-Teilnehmer (MDn) an die ihm zugeordneten Slave-Teilnehmer (SDn.m, UD-SDn.m, BD-SDn.m) über das Peer-to-Peer-Netzwerk (P2P);
d) Senden einer Verwaltungsnachricht, insbesondere mit Netzwerkanmeldungs-daten, Einstellungsdaten oder Warnmitteilungen, von den Slave-Teilnehmern (SDn.m, UD-SDn.m, BD-SDn.m) über das übergeordnete Niedrigenergie-Weitverkehrsnetz (LPWAN) an den anderen Teilnehmer, wie insbesondere den Server (SV).

## Beschreibung

Die Erfindung betrifft Verfahren zur drahtlosen Übertragung von Daten in einem mehrstufigen hierarchischen drahtlosen Netzwerk zwischen Teilnehmern des Netzwerkes, wobei ein übergeordnetes LPWAN-Netzwerk (LPWAN = "Low-Power-Wide-Area-Network") zur Kommunikation mit einem anderen Teilnehmer, wie beispielsweise ein Server, und ein untergeordnetes Peer-to-Peer-Netzwerk zur Kommunikation von Teilnehmern des Netzwerkes untereinander vorhanden ist.

Die Erfindung betrifft weiterhin eine Funkkommunikationseinrichtung mit einer Vielzahl von verteilt angeordneten Teilnehmern, die zur drahtlosen Übertragung von Daten in einem mehrstufigen hierarchischen drahtlosen Netzwerk zwischen den Teilnehmern des Netzwerkes eingerichtet sind, wobei ein übergeordnetes LPWAN-Netzwerk zur Kommunikation mit einem Server und ein untergeordnetes Peer-to-Peer-Netzwerk zur Kommunikation von Teilnehmern des Netzwerkes untereinander vorhanden ist.

Solche Verfahren und Funkkommunikationseinrichtungen kommen bei der Kommunikation im Internet-der-Dinge zum Einsatz, insbesondere in den Anwendungsbereichen SmartHome/Office und SmartCity/Smart Building, wobei eine Übertragbarkeit auf andere Anwendungsbereiche ebenfalls nahe liegt.

Unter dem Internet-der-Dinge (engl. Internet of Things - IoT) versteht man eine Infrastruktur, die physische und virtuelle Dinge mit und über das Internet verbindet (vgl. ITU-T Standard Y.2060). In diesem kommen Geräte (IoT-Devices) zum Einsatz, die u.a. in optimierter Weise Daten aufnehmen, messen und verarbeiten können oder als Aktuator eingesetzt werden und über Kommunikationsmöglichkeit vernetzt sind. Viele dieser Geräte sind drahtlose Geräte und verwenden neuartige LPWAN-Verbindungsnetze, wie z. B. 5G, Narrow-Band-Internet of Things (NB-IoT) oder Long-Range-Wide-Area-Netzwerk (abgekürzt: LoRaWAN).

Unterschieden werden im IoT verschiedene Anwendungsbereiche, wie z. B. SmartCity, SmartProduction oder SmartHome/Office. Insbesondere in den Bereichen SmartHome/Office und SmartCity existieren zahlreiche Anwendungen, bei denen Reichweiten überbrückt werden müssen, die im Vergleich zu den möglichen Reichweiten der typischen LPWAN-Verbindungsnetze vergleichsweise gering sind. Die Kommunikation der IoT-Devices über die Standard-Infrastruktur (Device-Gateway, etc.) ist in diesem Fall in vielerlei Hinsicht nicht optimal. Dies betrifft u. a. den relativ großen Energieverbrauch durch die Kommunikation oder Einschränkungen durch Beschränkungen der Time-On-Air, die u.a. die Zuverlässigkeit negativ beeinflussen können.

D. Zorbas, K. Abdelfadeel, P. Kotzanikolaou, D. Pesch: "TS-LoRa: Time-slotted LoRaWAN for the Industrial Internet of Things", Computer Communications 153 , 2020 beschreinbt eine Lösung für den Einsatz einer großen Anzahl von drahtlosen Sensorgeräten in industriellen Umgebungen, die über ein zuverlässiges Netzwerk mit geringer Latenz, geringem Stromverbrauch und niedrigen Betriebskosten verbunden werden. Hierzu bietet LoRaWAN zwar eine stromsparende und kostengünstige Netzwerktechnologie, doch das derzeitige ALOHA-basierte MAC-Protokoll schränkt die Skalierbarkeit und Zuverlässigkeit ein. Dieses Problem wird herkömmlicherweise durch die Verwendung von zeitgesteuerter Kommunikation verbessert, was nachteilig aber mit zusätzlichen Kosten für die Berechnung und Verbreitung des Übertragungszeitplans sowie für die Sicherstellung einer globalen Zeitsynchronisation verbunden ist. Mit TS-LoRa wird vorgeschlagen, dass sich die Geräte selbst organisieren und ihre Slot-Positionen in einem Frame autonom bestimmen. Es wird nur ein dedizierter Slot in jedem Frame verwendet, um eine globale Synchronisierung zu gewährleisten und Bestätigungen zu verarbeiten.

J. Haxhibeqiri, I. Moerman, J. Hoebeke: "Low Overhead Scheduling of LoRa Transmissions for Improved Scalability", IEEE INTERNET OF THINGS JOURNAL, VOL. 6, NO. 2, APRIL 2019 adressiert das Problem, dass die LoRaWAN-Spezifikation für Geräte der Klasse A aufgrund der ALOHA-ähnlichen Natur der MAC-Schicht mit Einschränkungen in der Skalierbarkeit verbunden ist. Es wird ein Synchronisations- und Planungsmechanismus für LoRaWAN-Netzwerke vorgeschlagen, die aus Geräten der Klasse A bestehen. Der Mechanismus läuft auf der LoRaWAN-MAC-Schicht. Eine zentrale Netzwerksynchronisationsinstanz und Netzwerksplanungsinstanz plant die Uplink- und Downlink-Übertragungen. Um die Länge der Synchronisationspakete zu reduzieren, werden alle Zeitschlitze, die einem Endknoten zugewiesen werden, in einer probabilistischen, platzsparenden Datenstruktur codiert. Ein Endknoten prüft, ob ein Zeitschlitz Teil der empfangenen Datenstruktur ist, um zu bestimmen, wann gesendet werden soll. Die Zeitschlitze werden auf der Grundlage des Verkehrsbedarfs der Endknoten zugewiesen.

D. Zorbas, B. O'Flynn: "Autonomous Collision-Free Scheduling for LoRa-based Industrial Internet of Things", IEEE 20th International Symposium on "A World of Wireless, Mobile and Multimedia Networks" , 2019 beschreibt eine Lösung für das Problem, dass LoRa-basierte Übertragungen selbst bei niedrigen Knotenzahlen unter umfangreichen Kollisionen aufgrund des ungeregelten Zugriffs auf das Medium leiden. Es wird ein kollisionsfreier Zeitschlitzplanungsansatz beschrieben, bei dem jeder Knoten basierend auf seiner eindeutigen Kennung autonom entscheidet, wann ein Paket übertragen wird. Die Kennung wird mithilfe einer Modulo-Operation in eine Zeitschlitznummer umgewandelt.

DE 10 2009 054 527 A1 offenbart ein Verfahren zum Betreiben eines Funknetzwerks in einer industriellen Prozessumgebung, wobei das Funknetzwerk mehrere Teilnehmer umfasst, die über das Funknetzwerk gesteuert und/oder überwacht werden. Wenigstens ein erster Teilnehmer des Funknetzwerks wird in einem ersten Betriebsmodus oder in einem zweiten Betriebsmodus betrieben. In dem ersten Betriebsmodus werden Daten mit einer ersten Aktualisierungsrate von dem ersten Teilnehmer gesendet. In dem zweiten Betriebsmodus werden Daten mit einer zweiten Aktualisierungsrate von dem ersten Teilnehmer gesendet, wobei die zweite Aktualisierungsrate höher ist als die erste Aktualisierungsrate. Wenigstens ein Teil der während des zweiten Betriebsmodus gesendeten Daten wird von wenigstens einem zweiten Teilnehmer des Funknetzwerks empfangen, wobei die von dem zweiten Teilnehmer empfangenen Daten ausgewertet und ein erster Kennwert der Qualität der Datenübertragung ermittelt und einem Benutzer zur Verfügung gestellt wird.

Ausgehend hiervon ist es Aufgabe der vorliegenden Erfindung, ein verbessertes Verfahren zur drahtlosen Übertragung von Daten in einem mehrstufigen hierarchischen drahtlosen Netzwerk zwischen Teilnehmern des Netzwerkes sowie eine verbesserte Funkkommunikationseinrichtung mit einer Vielzahl von verteilt angeordneten Teilnehmern zu schaffen, die zur drahtlosen Übertragung von Daten in einem mehrstufigen hierarchischen drahtlosen Netzwerk zwischen den Teilnehmern des Netzwerkes eingerichtet sind.

Die Aufgabe wird durch das Verfahren mit den Merkmalen des Anspruchs 1 und durch die Funkkommunikationsvorrichtung mit den Merkmalen des Anspruchs 14 gelöst. Vorteilhafte Ausführungsformen sind in den Unteransprüchen beschrieben.

Für das gattungsgemäße Verfahren werden die Schritte vorgeschlagen von:
a) Anmelden aller Teilnehmer des Netzwerkes an dem übergeordneten Niedrigenergie-Weitverkehrsnetzwerk (LPWAN), das durch Austausch von Schlüsseln zur verschlüsselten Datenkommunikation abgesichert ist;
b) Festlegen von Teilnehmern als P2P-Master-Teilnehmer für jeweils einen Knoten des untergeordneten Peer-to-Peer-Netzwerkes (P2P) und von Teilnehmern, die als unidirektionale Slave-Teilnehmer (SDn.m, UD-SDn.m) oder bidirektionale Slave-Teilnehmer (BD-SDn.m) einem P2P-Master-Teilnehmer (MDn) zur Datenübertragung in dem Peer-to-Peer-Netzwerk (P2P) zugeordnet sind;
c) Senden einer Nachricht durch einen P2P-Master-Teilnehmern (MDn) an die ihm zugeordneten Slave-Teilnehmer (SDn.m, UD-SDn.m, BD-SDn.m) über das Peer-to-Peer-Netzwerk (P2P);
d) Senden einer Verwaltungsnachricht, insbesondere mit Netzwerkanmeldungsdaten, Einstellungsdaten oder Warnmitteilungen, von den Slave-Teilnehmern (SDn.m, UD-SDn.m, BD-SDn.m) über das übergeordnete Niedrigenergie-Weitverkehrsnetzwerk (LPWAN) an den anderen Teilnehmer, wie insbesondere den Server (SV).

Einzelne Schritte und Schrittkombinationen können dabei iterativ wiederholt werden. Die Schritte a) und b) können in einer Konfigurationsphase vorgelagert sein. Nach Abschluss der Konfigurationsphase kann dann eine Betriebsphase folgen, in der die Schritte c) und d) zur Kommunikation von Daten, wie bspw. Sensordaten (Messdaten) und Steuerungsdaten für technische Einrichtungen, wiederholt durchgeführt werden.

Ein unidirektionaler Slave-Teilnehmer (UD-SDn.m) ist zum Empfangen von Nachrichten im P2P-Netzwerk (P2P) eingerichtet und kann keine Nachrichten nach dem P2P-Protokoll über das P2P-Netzwerk (P2P) aussenden. Im Hinblick auf das Niedrigenergie-Weitverkehrsnetz (LPWAN) kann ein unidirektionaler Slave-Teilnehmer (UD-SDn.m) hingegen bidirektional sein, um Nachrichten im LPWAN-Netz nach dem LPWAN-Protokoll zu empfangen und auszusenden.

Ein bidirektionaler Slave-Teilnehmer (BD-SDn.m) ist hingegen zur bidirektionalen Datenübertragung in dem P2P-Netzwerk (P2P) eingerichtet und hat damit auch eine Sendemöglichkeit im P2P-Netzwerk nach dem P2P-Protokoll, um Nachrichten zumindest an den P2P-Master-Teilnehmer (MDn) zu senden, insbesondere als Antwort auf eine Abfragenachricht. Die Abfragenachricht des P2P-Master-Teilnehmers (MDn) enthält dann vorzugsweise eine eineindeutige Adresse des bidirektionalen Slave-Teilnehmers BD-SDn.m), mit dem dieser angesprochen werden kann.

Durch die im Verfahren vorgeschlagene (hierarchische) Kommunikation ergeben sich zahlreiche Vorteile:

### 1. Reduktion der Energieaufnahme für die Kommunikation

Üblicherweise sind ein Großteil der zu übertragenden Daten im Netzwerk Nutzdaten. Diese werden im vorgeschlagenen Verfahren über ein Peer-to-Peer-Netzwerk (P2P) übertragen, wie bspw. über eine LoRa-basierte Verbindung nach dem LoRa-Kommunikationsstandard. Diese ist im Vergleich zur Übertragung im Standard-Niedrigenergie-Weitverkehrsnetzwerk LPWAN, wie bspw. LoRaWAN, wesentlich energiesparender, u.a. da beispielsweise bei unidirektionalen Slave-Teilnehmern nicht auf eine Rückantwort gewartet werden muss und damit ein früherer Übergang in den stromsparenden Power-Down-Mode des Teilnehmers möglich ist. Eine Datenübertragung im Peer-to-Peer-Netzwerk (P2P) erfordert aufgrund der räumlichen Nähe der durch das P2P-Netzwerk (P2P) verbundenen Teilnehmer zudem eine geringere Sendeleistung.

### 2. Verbesserung der Quality of Service

Typische LPWAN-Standardnetzwerke sehen im Protokoll eine Einschränkung der Time-On-Air vor, um die Architektur nicht zu überlasten und eine stabile Kommunikation aller Teilnehmer zu ermöglichen, sowie eine Einhaltung der Normen zu gewährleisten (Tastgrad). Dies kann zu Einschränkungen der Quality of Service führen, die bei einer P2P-Kommunikation der Teilnehmer zur Nutzdatenübertragung vermieden werden. Dies kann bei der Heizungssteuerung zwischen Wandthermostat als SOLL/IST-Wertgeber für Temperatur und den Heizkörperthermostaten dazu führen, dass die Temperaturregelung effizienter und genauer erfolgt. Eine P2P-Kommunikation erlaubt kürzere Reaktionszeiten bei Benutzereingaben und Nachrichten. Benutzeraktivitäten können von dem P2P-Master-Teilnehmer schneller übernommen und an die Slave-Teilnehmer weitergegeben werden.

### 3. Verringerung des Daten-Traffics mit dem Server

Ein hoher Daten-Traffic kann zu server-seitigen Einschränkungen bei der Datenkommunikation führen. Eine Verlagerung der Nutzdatenkommunikation auf die P2P-Kommunikation reduziert dieses Problem deutlich.

### 4. Reduzierung der Netzwerkkomplexität

Die P2P-Kommunikation nach dem vorgeschlagenen Verfahren kommt auch ohne Einbeziehung von Servern aus. Die direkte Kommunikation mit einem Server ist aber nicht ausgeschlossen. Die P2P-Master-Teilnehmer (MDn) verschiedener Gruppen können dabei untereinander über das LPWAN-Netzwerk Nutzdaten austauschen, um damit komplexere verteilte Einrichtungen zu überwachen und/oder zu steuern.

Im Bereich SmartBuilding/Office sind konkrete Anwendungsfälle beispielsweise:
a) die Vernetzung von unidirektionalen Heizungsstellern (über ein zentrales Thermostat),
b) die Vernetzung von Sensorik und Anzeigesystemen bei Wetterstationen;
c) die Vernetzung von energieautarken Windsensoren und Feuerklappen; und
d) die Vernetzung von bidirektionalen Teilnehmern, wie Fensterkontakten.

Jedem bidirektionalen Slave-Teilnehmer (BD-SDn.m) einer Gruppe, die einem P2P-Master-Teilnehmer (MDn) zugeordnet ist, kann eine eineindeutige Identifikationsnummer zugeordnet werden. Damit können die bidirektionalen Slave-Teilnehmer mit einer Nachricht eindeutig angesprochen werden, um eine Abfrage auszulösen und der so angesprochene Slave-Teilnehmer kann dann mit einer durch die Identifikationsnummer versehene Nachricht eineindeutig antworten.

Es kann ein Senden von Nutzdaten durch die bidirektionalen Slave-Teilnehmer einer Gruppe als Antwort auf die Abfragenachricht des P2P-Master-Teilnehmer (MDn) in einem Zeitfenster, das durch eine festgelegte Zeitverzögerung nach Empfang der Nachricht des P2P-Master-Teilnehmers (MDn) und durch eine von einer festgelegten Datenübertragungszeit und der Identifikationsnummer abhängigen Zeit bestimmt wird, erfolgen. Dabei können die bidirektionalen Slave-Teilnehmer (BD-SDn.m) wahlweise untereinander Daten über das untergeordnete Peer-to-Peer-Netzwerk (P2P) austauschen, Daten an unidirektionale Slave-Teilnehmer (UD-SDn.m) über das untergeordnete Peer-to-Peer-Netzwerk (P2P) übertragen, Daten an einen anderen Teilnehmer durch Zwischenschaltung des P2P-Master-Teilnehmers (MDn) übertragen, oder Daten direkt mit einem anderen Teilnehmer über das übergeordnete Niedrigenergie-Weitverkehrsnetz (LPWAN) austauschen. Die bidirektionalen Slave-Teilnehmer (BD-SNn.m) sind somit gleichermaßen an das P2P-Netzwerk (P2P) und das Niedrigenergie-Weitverkehrsnetz (LPWAN) angebunden, wobei die Einbindung an beide Netze durch die Zuordnung einer eineindeutigen Identifikationsnummer über das Niedrigenergie-Weitverkehrsnetz auf geschützte Weise (verschlüsselt) erfolgt.

Es ist vorteilhaft, wenn die bidirektionalen Slave-Teilnehmer (BD-SDn.m) nur dann Daten in ihrem Zeitfenster senden, wenn eine Änderung gegenüber den zuletzt gesendeten Nutzdaten, wie bspw. Sensordaten, Gerätezustandsdaten oder Steuerungsdaten, vorliegt.

Eine solche Nutzdatenänderung kann dann vorliegen bzw. angenommen werden, wenn ein Sensorwert von dem zuletzt gesendeten Sensorwert mit einer vorgegebenen Differenz abweicht.

Der P2P-Master-Teilnehmer (MDn) kann mit seiner Nachricht im Schritt c) an die Slave-Teilnehmer (SDn.m) seiner Gruppe die ihm bekannten, zuletzt gesendeten Nutzdaten der Slave-Teilnehmer (SDn.m) übertragen, wobei die bidirektionalen Slave-Teilnehmer (BD-SDn.m) die Nutzdatenänderung durch Vergleich der aktuellen Nutzdaten des bidirektionalen Slave-Teilnehmers (BD-SDn.m) mit den vom P2P-Master-Teilnehmer (MDn empfangenden Nutzdaten ermittelt.

Die Datenübertragung zwischen dem P2P-Master-Teilnehmer (MDn) und dem Slave-Teilnehmern (SDn.m) einer Gruppe des Peer-to-Peer-Netzwerkes (P2P) kann in einem ersten Zeitintervall über das untergeordnete Peer-to-Peer-Netzwerk (P2P) und die direkte Datenübertragung des P2P-Master-Teilnehmers (MDn) bzw. der bidirektionalen Slave-Teilnehmer (SDn.m) mit dem Server in einem zweiten Zeitintervall über das übergeordnete Niedrigenergie-Weitverkehrsnetzwerk (LPWAN) erfolgen, wobei das erste Zeitintervall wesentlich keiner als das zweite Zeitintervall ist. Das erste Zeitintervall kann beispielsweise kleiner als alle 60 Sekunden und das zweite Zeitintervall beispielsweise größer als alle 10 Stunden sein.

Die Datenübertragung von Verwaltungsdaten, welche keine Nutzdaten, wie insbesondere Sensordaten und/oder Steuerungsdaten sind, kann durch die Slave-Teilnehmer (SDn.m) über das übergeordnete Niedrigenergie-Weitverkehrsnetz (LPWAN) erfolgen.

Konfigurationsdaten können als Verwaltungsdaten über das übergeordnete Niedrigenergie-Weitverkehrsnetz (LPWAN) übertragen werden.

Die Verwaltungsdaten können über das übergeordnete Niedrigenergie-Weitverkehrsnetz (LPWAN) übertragen werden und im ersten Zeitintervall zu übertragende Nutzdaten über das untergeordnete Peer-to-Peer-Netzwerk (P2P) übertragen werden. Vorteil ist es, wenn die Verwaltungsdaten in Form von kryptisch gesicherten Einrichtungsdaten ausschließlich über das Niedrigenergie-Weitverkehrsnetz (LPWAN) an die Teilnehmer übertragen werden, um damit auf sichere Weise eine Gruppe des Peer-to-Peer-Netzes (P2P) zu bilden.

Die Funkkommunikationseinrichtung hat eine Vielzahl von verteilt angeordneten Teilnehmern, die zur drahtlosen Übertragung von Daten in einem mehrstufigen hierarchischen drahtlosen Netzwerk zwischen den Teilnehmern des Netzwerkes eingerichtet sind, wobei ein übergeordnetes Niedrigenergie-Weitverkehrsnetz (LPWAN) zur Kommunikation mit einem Server und ein untergeordnetes Peer-to-Peer-Netzwerk (P2P) zur Kommunikation von Teilnehmern des Netzwerkes untereinander vorhanden ist.

Es wird vorgeschlagen, dass
a) die Teilnehmer des Netzwerkes zum Anmelden an dem übergeordneten Niedrigenergie-Weitverkehrsnetz (LPWAN) bei dem Server eingerichtet sind, das durch Austausch von Schlüsseln zur verschlüsselten Datenkommunikation abgesichert ist;
b) Teilnehmer als P2P-Master-Teilnehmer (MDn) für jeweils einen Knoten des untergeordneten Peer-to-Peer-Netzwerkes (P2P) festgelegt sind, und Teilnehmer als unidirektionale Slave-Teilnehmer (UD-SDn.m) oder bidirektionale Slave-Teilnehmer (BD-SDn.m) einem P2P-Master-Teilnehmer zur Datenübertragung in dem Peer-to-Peer-Netzwerk (P2P) zugeordnet sind; und
c) die P2P-Master-Teilnehmer (MDn) zum Senden einer Nachricht an die dem jeweiligen P2P-Master-Teilnehmer (MDn) zugeordneten Slave-Teilnehmer (SDn.m) über das Peer-to-Peer-Netzwerk (P2P) eingerichtet sind.

Es ist vorteilhaft, wenn zumindest jedem bidirektionalen Slave-Teilnehmer (BD-SDn.m) einer Gruppe, die einem P2P-Master-Teilnehmer (MDn) zugeordnet ist, eine eineindeutige Identifikationsnummer zugeordnet wird. Dies kann bei der Einrichtung über eine kryptisch gesicherte Kommunikation über das Niedrigenergie-Weitverkehrsnetz (LPWAN) erfolgen.

Die bidirektionalen Slave-Teilnehmer (BD-SDn.m) einer Gruppe können zum Senden von Daten als Antwort auf die Abfrage des P2P-Master-Teilnehmers (MDn) der Gruppe in einem Zeitfenster, das durch eine festgelegte Zeitverzögerung nach Empfang der Nachricht des P2P-Master-Teilnehmers (MDn) und durch eine von einer festgelegten Datenübertragungszeit und der Identifikationsnummer abhängigen Zeit bestimmt wird, eingerichtet sein.

Die P2P-Master-Teilnehmer (MDn) sind hierzu zum Empfangen der Daten der zugeordneten Slave-Teilnehmer eingerichtet.

Die bidirektionalen Slave-Teilnehmer (BD-SDn.m) können eingerichtet sein, um wahlweise untereinander Daten über das untergeordnete Peer-to-Peer-Netzwerk (P2P) auszutauschen, Daten an unidirektionale Slave-Teilnehmer (UD-SDn.m) über das untergeordnete Peer-to-Peer-Netzwerk (P2P) zu übertragen, Daten mit einem anderen Teilnehmer, wie bspw. einem Server, durch Zwischenschaltung des P2P-Master-Teilnehmers auszutauschen, oder Daten direkt mit dem anderen Teilnehmer, wie bspw. einem Server, über das übergeordnete Niedrigenergie-Weitverkehrsnetz (LPWAN) auszutauschen. Der andere Teilnehmer, wie bspw. ein Server, ist dabei kein über eine Peer-to-Peer-Netzwerk-Verbindung zwischen P2P-Teilnehmern direkt erreichbarer P2P-Teilnehmer, sondern nur an das Peer-to-Peer-Netzwerk angebunden.

Die Teilnehmer und ggf. ein Server sind damit zur Durchführung des oben beschriebenen Verfahrens eingerichtet.

Mindestens ein Gateway-Teilnehmer, beispielsweise ein Repeater, kann in den direkten Kommunikationspfad mit einem anderen Teilnehmer, wie bspw. einem Server, oder anderen P2P-Master-Teilnehmern (MDn) anderer Gruppen über das übergeordnete Niedrigenergie-Weitverkehrsnetz (LPWAN) zwischengeschaltet sein, wobei der Gateway-Teilnehmer zur bidirektionalen Weiterleitung von Daten zwischen den Teilnehmern des Peer-to-Peer-Netzwerkes (SDn.m, UD-SDn.m und BD-SDn.m) und dem anderen Teilnehmer, wie insb. dem Server (SV), eingerichtet ist.

Zur Absicherung der Datenkommunikation können mit der Anmeldung der Teilnehmer an dem Niedrigenergie-Weitverkehrsnetzwerk (LPWAN) bspw. von einem Server Schlüssel zur Verschlüsselung der von den Teilnehmern übertragenen Datenpakete über das übergeordnete Niedrigenergie-Weitverkehrsnetzwerk (LPWAN) an die sich anmeldenden Teilnehmer übertragen werden. Damit wird die Kommunikation im Niedrigenergie-Weitverkehrsnetzwerk (LPWAN) abgesichert. Zudem können über das damit abgesicherte Niedrigenergie-Weitverkehrsnetzwerk (LPWAN) Schlüssel zur gesicherten Kommunikation im Peer-to-Peer-Netzwerk an die Teilnehmer auf einem sicheren Kanal übertragen werden. Damit ist auch eine verschlüsselte Datenübertragung im Peer-to-Peer-Netzwerk möglich.

Für die verschlüsselte Datenübertragung im Peer-to-Peer-Netzwerk können optional die zur gesicherten Kommunikation im Niedrigenergie-Weitverkehrsnetzwerk (LPWAN) ausgetauschten Schlüssel eingesetzt werden, ggf. nach Modifikation durch einen in den Teilnehmern fest und sicher abgelegten Algorithmus.

Die Erfindung wird nachfolgend anhand von Ausführungsbeispielen mit den beigefügten Zeichnungen näher erläutert. Es zeigen:
- Fig. 1 -: Skizze einer Netztopologie mit Teilnehmern und ihre Kommunikation in einem übergeordneten Niedrigenergie-Weitverkehrsnetzwerk LPWAN und einem untergeordneten Peer-to-Peer-Netzwerk P2P;
- Fig. 2 -: Skizze einer Kommunikation zwischen Teilnehmern mit einem Server SV und untereinander in dem Netzwerk aus Figur 1;
- Fig. 3 -: Flussdiagramm des Verfahrens zur drahtlosen Datenübertragung in dem Netzwerk aus Figur 1;
- Fig. 4 -: Skizze des Aufbaus eines beispielhaften Datenpakets für die Kommunikation der Teilnehmer;
- Fig. 5 -: Skizze einer Netztopologie mit Teilnehmern und ihre unidirektionale und bidirektionale Kommunikation in einem übergeordneten Niedrigenergie-Weitverkehrsnetzwerk und einem untergeordneten Peer-to-Peer-Netzwerk;
- Fig. 6 -: Skizze einer bidirektionalen Kommunikation zwischen Teilnehmern untereinander und einem Server SV in dem Netzwerk aus Figur 5.

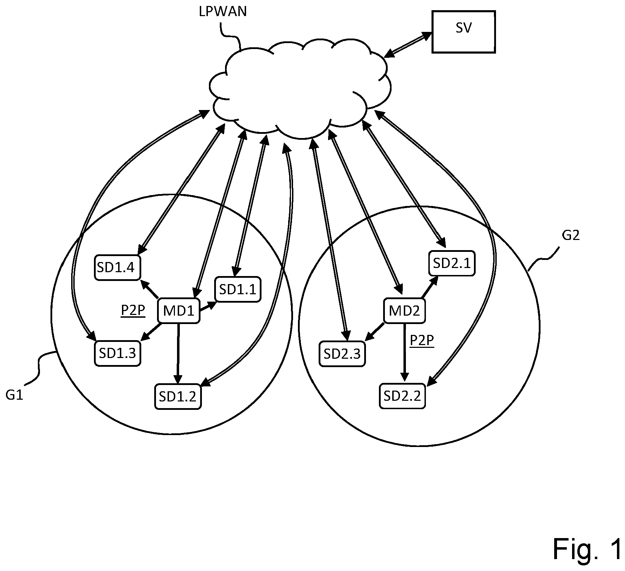

Figur 1 zeigt eine Skizze einer Netztopologie mit Teilnehmern und ihre Kommunikation in einem übergeordneten Niedrigenergie-Weitverkehrsnetzwerk LPWAN, wie insbesondere ein LoRaWAN-Netzwerk, und einem untergeordneten Peer-to-Peer-Netzwerk P2P.

Es wird eine energiesparende optimierte Kommunikation mittels eines mehrstufigen hierarchischen drahtlosen Netzwerks HiLPWAN realisiert. Die beiden Stufen des Netzwerks, d.h. das übergeordnete LPWAN-Netzwerk und das untergeordnete (dezentrale) Peer-to-Peer-Netzwerk P2P, unterscheiden sich bzgl. der Übertragungsgeschwindigkeit, der Reichweite und des Energiebedarfs. Die unterschiedlichen Netzwerkstufen werden bedarfsgerecht genutzt. Dies ermöglicht eine Optimierung der Kommunikation in Bezug auf deren Energiebedarf, der Quality of Service und in Bezug auf die Komplexität der benötigten Netzwerkarchitektur.

Anwendung findet das Kommunikationsverfahren bei drahtlosen Netzwerken, die geringe Reichweiten benötigen (im Vergleich z.B. zu typischen LPWAN-Verbindungsnetzen). Solche Anwendungsfälle finden sich vor allem im Bereich SmartHome, SmartCity oder SmartBuilding zu finden. Vernetzt werden in diesen Anwendungen vor allem Sensoren und Aktoren, die örtlich verhältnismäßig eng beieinander liegen und über ein drahtloses Netzwerk Daten austauschen. Diese Sensoren und Aktoren sind Teilnehmer des hierarchischen drahtlosen Netzwerkes, die als Slave-Teilnehmer eines Peer-to-Peer-Netzwerkes festgelegt werden. Eine Gruppe solcher Slave-Teilnehmer wird einem P2P-Master-Teilnehmer zugeordnet, der die Kommunikation im Peer-to-Peer-Netzwerk P2P durch regelmäßige Abfrage steuert. Es können mehrere solcher Gruppe G1, G2, Gn vorhanden sein, die voneinander unabhängige oder sich räumlich überlappende Peer-to-Peer-Netzwerke zusammen mit ihren jeweiligen P2P-Master-Teilnehmern MDn bilden.

Ein konkretes Anwendungsbeispiel ist eine elektronische Heizkörpersteuerung in großen Arbeitsräumen und -bereichen, in denen mehrere Heizkörper mittels elektronischen Heizköperthermostaten eTRV über ein zentrales Wandthermostat WTH gesteuert werden. Die Heizkörperthermostate eTRV stellen hierbei Aktor-Devices dar. Der einer Gruppe von Heizkörperthermostaten zugeordnete Wandthermostat WTH stellt das Sensor-Device dar. Statt über ein Niedrigenergie-Weitverkehrsnetzwerk (z.B. LoRaWAN) werden die Nutzdaten zwischen den Teilnehmern untereinander über eine Peer-to-Peer-Verbindung P2P, wie z.B. mit einem Kommunikationsprotokoll nach dem LoRa-Standard, ausgetauscht.

Es ist erkennbar, dass für jede Gruppe G1, G2 des Peer-to-Peer-Netzwerkes P2P jeweils ein P2P-Master-Teilnehmer MD1, MD2 festgelegt ist. Dies kann bspw. ein zentrales Wandthermostat WTH sein. Die Slave-Teilnehmer SD1.n der ersten Gruppe G1 sind zum lokalen drahtlosen Empfangen von Nachrichten bzw. Daten über das Peer-to-Peer-Netzwerk P2P von dem P2P-Master-Teilnehmer MD1 eingerichtet. Diese Nachrichten können im Broadcast an alle Slave-Teilnehmer SD1.n der ersten Gruppe oder ggf. mit Adressierung auch nur an ausgewählte Slave-Teilnehmer SD1.n gerichtet sein. Wenn mehr als eine Gruppe G1 vorhanden ist, sind die Slave-Teilnehmer SD2.n der zweiten Gruppe G2 zum lokalen drahtlosen Empfang von Daten über das Peer-to-Peer-Netzwerk P2P von dem P2P-Master-Teilnehmer MD2 eingerichtet. Entsprechendes gilt für die Teilnehmer der weiteren Gruppen Gn, die jeweils im Peer-to-Peer-Netzwerk P2P gesteuert durch ihren jeweiligen P2P-Master-Teilnehmer MDn von diesem Nachrichten lokal nach dem Kommunikationsstandard des Peer-to-Peer-Netzwerkes P2P empfangen.

Alle Teilnehmer MDn, SDn.m, mit n = 1 bis Anzahl N von Gruppen G und m = 1 bis Anzahl M von Slave-Teilnehmern einer Gruppe Gn, sind zur drahtlosen (globalen) bidirektionalen Übertragung von Daten mit einem anderen Teilnehmer außerhalb des Peer-to-Peer-Netzwerkes P2P, wie insb. einem Server SV, über das Niedrigenergie-Weitverkehrsnetz LPWAN, wie bspw. Long-Range-Wide-Area-Netzwerk (abgekürzt: LoRaWAN), eingerichtet.

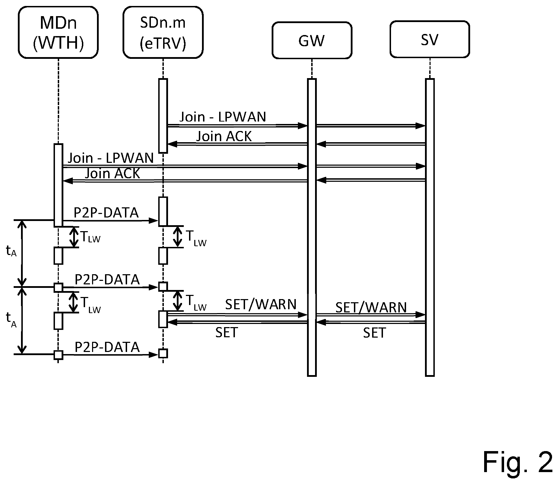

Figur 2 zeigt eine Skizze einer Kommunikation zwischen Teilnehmern SDn.m MDn mit einem Server SV und zum Empfang von Nachrichten des P2P-Master-Teilnehmers MDn durch die Slave-Teilnehmer SDn in dem hierarchischen drahtlosen Netzwerk aus Figur 1. Dabei ist ein Gateway zur Verlängerung der Reichweite zwischengeschaltet. Das Gateway kann beispielsweise ein Repeater sein oder ein Knotenpunkt, der eine drahtlose LPWAN-Verbindung in der Umgebung der Gruppen G1, G2 aufbaut und drahtgebunden oder drahtlos mit dem Internet oder einem anderen Kommunikationsweg verbunden ist. Der Server SV kann direkt drahtlos über einen LPWAN-Kanal oder über das Internet bzw. einen anderen drahtlosen oder drahtgebundenen Kommunikationsweg mit dem Gateway verbunden sein.

In einer ersten Konfigurationsphase werden die Teilnehmer bei dem Server SV und damit bei dem Niedrigenergie-Weitverkehrsnetzwerk LPWAN angemeldet. Hierzu senden die Teilnehmer, d.h. die Slave-Teilnehmer SDn.m und die P2P-Master-Teilnehmer MDn, eine Anfrage JOIN zur Einbindung in das Niedrigenergie-Weitverkehrsnetzwerk LPWAN. Nach Prüfung der Zulässigkeit des Teilnehmers SDn.m, MDn wird die Einbindung von dem Server SV durch eine Bestätigungsnachricht JOIN ACK bestätigt (ACK = Acknowledgement).

Der P2P-Master-Teilnehmer MDn einer Gruppe Gn sendet ein P2P-Datenpaket P2P DATA mit einer Nachricht mit Nutzdaten an die zugeordneten Slave-Teilnehmer SDn.m der Gruppe Gn. Nach einer festgelegten Verzögerungszeit t_{A} kann der P2P-Master-Teilnehmer MDn die nächste Nachricht P2P-DATA über die P2P-Verbindung aussenden.

Nach dem Zeitfenster für das Aussenden des P2P-Datenpakets und einer festgelegten Verzögerungszeit t_{LW} beginnt ein Zeitfenster, in dem eine Kommunikation über das Niedrigenergie-Weitverkehrsnetz LPWAN möglich ist. Auf diese Weise kann der P2P-Master-Teilnehmer MDn regelmäßig im Zeitintervall t_{A} Nachrichten in Form von P2P-Datenpaketen an die Slave-Teilnehmer SDn.m der Gruppe Gn übertragen. Die Slave-Teilnehmer SDn.m und der P2P-Master-Teilnehmer MDn haben zudem die Möglichkeit nach einer Wartezeit T_{LW} Nachrichten über das Niedrigenergie-Weitverkehrsnetzwerk LPWAN an andere Teilnehmer außerhalb des P2P-Netzwerkes zu übertragen, wie bspw. Warnmeldungen oder Geräteeinstelldaten, oder zu empfangen.

Die Abfragen des P2P-Master-Teilnehmers MDn einer Gruppe Gn werden in Zeitintervallen t_{A} wiederholt. Diese Zeitintervalle t_{A}, können beispielsweise im Bereich von 20 bis 60 Sekunden und bevorzugt alle 30 Sekunden liegen. Die Zeitintervalle t_{A} können regelmäßig sein, um damit einen Kollisionsschutz für die gesendeten Datenpakete sicherzustellen. Es ist aber auch denkbar, dass die Zeitintervalle t_{A}, variiert werden, bspw. dynamisch verschoben werden. Dabei wären dann Maßnahmen zu treffen, um eine Kollision der Datenpakete zu verhindern, sofern dieses Risiko nicht durch mehrfache Übertragung in Kauf genommen wird.

Die Teilnehmer, d.h. die P2P-Master-Teilnehmer MDn, und Slave-Teilnehmer SDn.m, können bedarfsweise jederzeit auch Daten an den Server SV über das Niedrigenergie-Weitverkehrsnetzwerk LPWAN übertragen bzw. vom Server SV hierüber Daten empfangen. Dies erfolgt nach dem LPWAN-Kommunikationsstandard, wie bspw. LoRaWAN. Dabei können die LPWAN-Datenpakete bspw. Nutzdaten und/oder Verwaltungsdaten, wie bspw. Einstellungen SET oder Warnungen WARN enthalten. Vorteilhaft ist es, wenn die P2P-Master-Teilnehmer MDn ihre Nutzdaten ausschließlich über das Peer-to-Peer-Netzwerk P2P an die zugeordneten Slave-Teilnehmer SDn.m übertragen. Der P2P-Master-Teilnehmer MD.n kann die Nutzdaten dann entweder einzeln oder gebündelt und ggf. aufbereitet an den Server SV über das Niedrigenergie-Weitbereichsnetzwerk LPWAN mit dem LPWAN-Kommunikationsprotokoll übertragen.

Die Intervalle für die LPWAN-Kommunikation mit dem Server SV sollten deutlich länger als die Sendeintervalle t_{A}, sein. Sie können beispielsweise im Bereich von Minuten bis Stunden, wie bspw. alle 10 Minuten bzw. alle 12 Stunden, liegen.

Durch den bestehenden sicheren LPWAN-Kanal können die Schlüssel zum Verschlüsseln der im Peer-to-Peer-Netzwerk P2P übertragenen P2P-Pakete sicher an die Teilnehmer SDn.m; MDn verteilt werden. Dadurch ist im Peer-to-Peer-Netzwerk P2P bzw. im zugehörigen P2P-Protokoll selbst kein Schlüsselaustausch erforderlich, welcher ansonsten z.B. mittels asymmetrischen Verschlüsselungsverfahren realisiert werden müsste. Hierdurch ergibt sich eine deutliche Vereinfachung im Peer-to-Peer-Netzwerk P2P. Damit müssen die Schlüssel nicht mehr alternativ fest in das Gerät eingebracht werden, was in der Praxis nicht oder nur umständlich, z.B. durch Flashen von nicht-zugänglichen Speichern der Endgeräte, realisierbar ist.

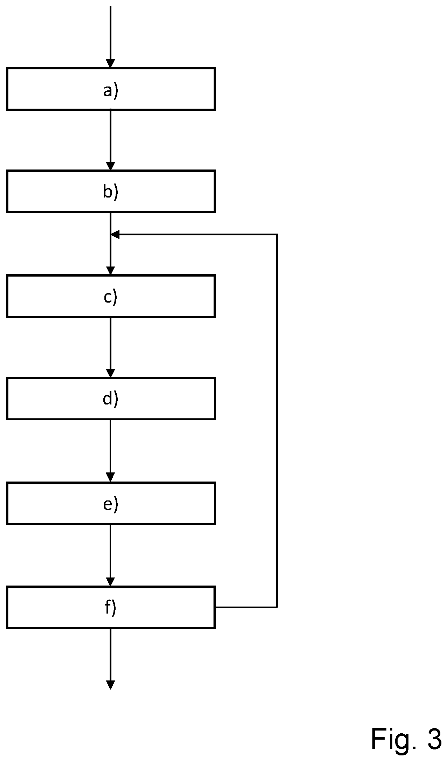

Figur 3 zeigt ein Flussdiagramm des Verfahrens zur drahtlosen Datenübertragung in dem Netzwerk aus Figur 1. Das Verfahren führt eine drahtlose Übertragung von Daten in einem mehrstufigen hierarchischen drahtlosen Netzwerk zwischen Teilnehmern des Netzwerkes aus, wobei ein übergeordnetes Niedrigenergie-Weitverkehrsnetz LPWAN, zur Kommunikation mit einem Server und ein untergeordnetes Peer-to-Peer-Netzwerk zur Kommunikation von Teilnehmern des Netzwerkes untereinander vorhanden ist. Das LPWAN-Netzwerk kann vorzugsweise ein LoRaWAN-Netzwerk (Long Range Wide Area Network) sein. Denkbar ist aber auch ein LPWAN-Netzwerk nach den Standards NB-IoT, LTE-M, SigFox, Symphony Link, Nwave, RMPA, Weightless und dergleichen.

Das Verfahren hat eine Konfigurationsphase, in der Teilnehmer an dem Netzwerk angemeldet werden. Die Konfigurationsphase hat die Schritte:
a) Anmelden aller Teilnehmer des Netzwerkes an dem übergeordneten Niedrigenergie-Weitbereichsnetzwerk, das durch Austausch von Schlüsseln zur verschlüsselten Datenkommunikation abgesichert ist;
b) Festlegen von Teilnehmern als P2P-Master-Teilnehmer MDn für jeweils einen Knoten des untergeordneten Peer-to-Peer-Netzwerkes P2P und von Teilnehmern, die als unidirektionale Slave-Teilnehmer UD-SDn.m oder bidirektionale Slave-Teilnehmer BD-SDn.m einem P2P-Master-Teilnehmer MDn zur Datenübertragung in dem Peer-to-Peer-Netzwerk (P2P) zugeordnet sind. Dabei kann jedem bidirektionalen Slave-Teilnehmer SDn.m einer Gruppe, die einem P2P-Master-Teilnehmer MDn zugeordnet ist, eine eineindeutige Identifikationsnummer erhalten.

In dem Schritt a) können mit der Anmeldung vom Server Schlüssel zur Verschlüsselung der von den Teilnehmern übertragenen Datenpakete über das übergeordnete Niedrigenergie-Weitbereichsnetzwerk LPWAN, z.B. LoRaWAN, an die sich anmeldenden Teilnehmer übertragen werden.

Die Datenkommunikation erfolgt in einer Betriebsphase mit dem Schritt:
c) Senden einer Nachricht durch einen P2P-Master-Teilnehmern MDn an die ihm zugeordneten Slave-Teilnehmer SDn.m über das Peer-to-Peer-Netzwerk P2P;
d) Senden einer Verwaltungsnachricht, insbesondere mit Einstellungsdaten oder Warnmitteilungen, von den Slave-Teilnehmern SDn.m über das übergeordnete Niedrigenergie-Weitverkehrsnetzwerk LPWAN an andere Teilnehmer außerhalb des Peer-to-Peer-Netzwerkes P2P, wie insbesondere einen Server SV.

Für die bidirektionale Kommunikation mit bidirektionalen Slave-Teilnehmern BD-SDn.m können die weiteren Schritte vorgesehen sein von:
e) Senden von Daten durch die bidirektionalen Slave-Teilnehmer BD-SDn.m einer Gruppe als Antwort auf die Nachricht des P2P-Master-Teilnehmers MDn in einem Zeitfenster, das durch eine festgelegte Zeitverzögerung nach Empfang der Abfrage des P2P-Master-Teilnehmers MDn und durch eine von einer festgelegten Datenübertragungszeit und der Identifikationsnummer abhängigen Zeit bestimmt wird;
f) Empfangen der Daten durch den P2P-Master-Teilnehmer MDn, wobei die bidirektionalen Slave-Teilnehmer BD-SDn.m wahlweise untereinander Daten über das untergeordnete Peer-to-Peer-Netzwerk P2P austauschen können, Daten an unidirektionale Slave-Teilnehmer UD-SDn.m über das untergeordnete Peer-to-Peer-Netzwerk P2P übertragen können, Daten an einen anderen Teilnehmer, wie bspw. einem Server SV, oder einen P2P-Teilnehmer SDn.m durch Zwischenschaltung des P2P-Master-Teilnehmers MDn austauschen können, oder Daten mit dem anderen Teilnehmer direkt, ggf. mit zwischengeschaltetem Gateway, über das übergeordnete Niedrigenergie-Weitbereichsnetzwerk LPWAN austauschen können.

Die Nachricht im Schritt c) wird von dem P2P-Master-Teilnehmer MDn ständig wiederholt, um in einem kurzen ersten Zeitintervall t_{A} die Datenübertragung an die Slave-Teilnehmer SDn.m der zugeordneten Gruppe in den Zeitslots vorzunehmen oder eine bidirektionale Datenübertraguung mit bidirektionalen Slave-Teilnehmern BD-SDn.m anzustoßen, die durch die eineindeutige Teilnehmernummer, die festgelegte maximale Datenpaket-Übertragungszeit und eine festgelegte Verzögerungszeit bestimmt sind.

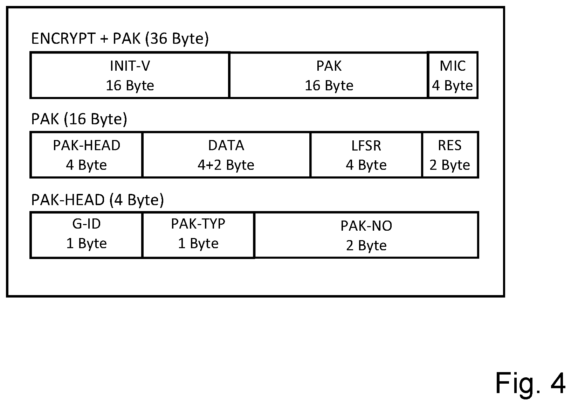

Figur 4 zeigt eine Skizze des Aufbaus eines beispielhaften Datenpakets für die Kommunikation der Teilnehmer.

Diese beispielhafte Paketstruktur ist kompakt, leicht erweiterbar und mit geringem Aufwand zu verschlüsseln, was zu einer weiteren Verringerung des Kommunikationsaufwandes und damit des Energieverbrauchs führt.

Das für die P2P-Kommunikation vorgesehene Datenpaket hat einen Umfang von 36 Byte und ist verschlüsselt. Es enthält die Verschlüsselung mit einem Initialisierungsvektor INIT-V von 16 Byte, ein Nutzdatenpaket PAK von 16 Byte sowie ein Prüfcode bzw. Nachrichtenintegritätscode MIC ("Message Integrity Code").

Das Nutzdatenpaket enthält einen Paketkopf ("Header") PAK-HEAD von 4 Byte, die Nutz- und Steuerungsdaten DATA von 4 + 2 Byte, einen Schieberegisterwert LFSR von 4 Byte und eine Reserve RES für optionale Anwendungen von 2 Byte. Der Schieberegisterwert gibt die Position in einem Linearen Feedback Schiebe-Register an, das aus einem vorherigen Zustand das Eingangsbit mit einer binären Funktion erzeugt.

Der Paketkopf ("Header") PAK-HEAD enthält die eineindeutige Gruppen-Identifikationsnummer G-ID der Gruppe Gn mit 1 Byte, den Patenttyp PAK-TYP mit 1 Byte und die Paketnummer PAK-NO mit 2 Byte.

Auf Basis einer beispielhaften Realisierung für den Anwendungsbereich der Heizungssteuerung mittels elektronischen Heizungsstellern und einer separaten Bedieneinheit konnten signifikante Verbesserungen insbesondere bezüglich der nachfolgenden Aspekte erzielt werden.

### 1. Kommunikationsenergie

Signifikante Energieeinsparungen entstehen, da ein unidirektionaler Slave-Teilnehmer UD-SDn.m, wie bspw. ein Sensor, nicht auf Rückantworten des Gateways warten muss und darüber hinaus eine Verkürzung des Sendevorgangs möglich ist. Die folgende Tabelle stellt den mittleren Strombedarf des Sensors (d.h. des unidirektionalen Slave-Teilnehmers UD-SDn.m), bei klassischer LoRaWAN-Kommunikation und dem vorgeschlagenen hierarchischen Sendeverfahren HiLPWAN für verschiedene Sendeintervalle gegenüber:

**Tab. 1: Mittlerer Stromverbrauch bei Verwendung von LoRaWAN und HiLPWAN in µA**

| Sendeintervall in Sekunden | LoRaWAN SF7 | LoRaWAN SF9 | LoRaWAN SF12 | HiLPWAN Rx | HiLPWAN Tx |
|---|---|---|---|---|---|
| 15 s | 267,3 µA | 612,7 µA | 5.748,7 µA | 11,1 µA | 12,7 µA |
| 30 s | 133,7 µA | 306,3 µA | 2.874,3 µA | 5,5 µA | 6,4 µA |
| 60 s | 66,8 µA | 153,2 µA | 1437,2 µA | 2,8 µA | 3,2 µA |
| 120 s | 33,4 µA | 76,6 µA | 718,6 µA | 1,4 µA | 1,6 µA |

### 2. Verbesserung der Quality of Service (QoS)

Eine Verbesserung des QoS ergibt sich vor allem durch die geringere Energieaufnahme der P2P-Kommunikation. Bei Annahme eines festen Energievorrates (Kapazität einer Batterie) und einer angenommenen festen Betriebsdauer (z.B. 10 Jahre Betrieb ohne Batteriewechsel) lässt sich eine deutlich höhere Zahl von Kommunikationsvorgängen realisieren. Dies wird durch die folgende Beispielrechnung nachgewiesen.

Bei einem durchschnittlichen Strom von 6,4 µA kann mit Standard LoRaWAN auf SF7 nur alle 560 Sekunden eine Nachricht versendet werden. Durch die Verwendung der LoRa Direktsendung kann mit demselben mittleren Strom alle 30 Sekunden eine Nachricht übermittelt werden. Bei SF 9 wäre mit LoRaWAN sogar nur alle 1.430 Sekunden mit derselben Stromaufnahme eine Sendung möglich.

### 3. Verringerung des Daten-Traffics mit dem Server

Durch die direkte Verbindung unter den Geräten kann auf einen Großteil der LoRaWAN-Sendungen verzichtet werden, da nur noch der Wandthermostat WTH regelmäßig mit dem LoRaWAN kommunizieren muss. Wenn man annimmt, dass durchschnittlich drei Heizkörperthermostate eTRV mit einem Wandthermostat WTH verbunden werden, reduziert sich der Datenverkehr ("Traffic") auf etwa ein Viertel im Vergleich zur vorherigen LoRaWAN Lösung mit direktem Datenaustausch der Teilnehmer über das Niedrigenergie-Weitverkehrsnetzwerk (LPWAN).

### 4. Reduzierung der Netzwerkkomplexität

Bei Verwendung der Kommunikation über LoRaWAN ist zwingend ein Applikation-Server notwendig, der die Daten unter den Geräten weiterleiten muss. Bei dem erfindungsgemäßen Verfahren mit Kommunikation in einem hierarchischen drahtlosen Netzwerk HiLPWAN kann optional auch auf einen Server SV verzichtet werden, da die Geräte direkt miteinander kommunizieren.

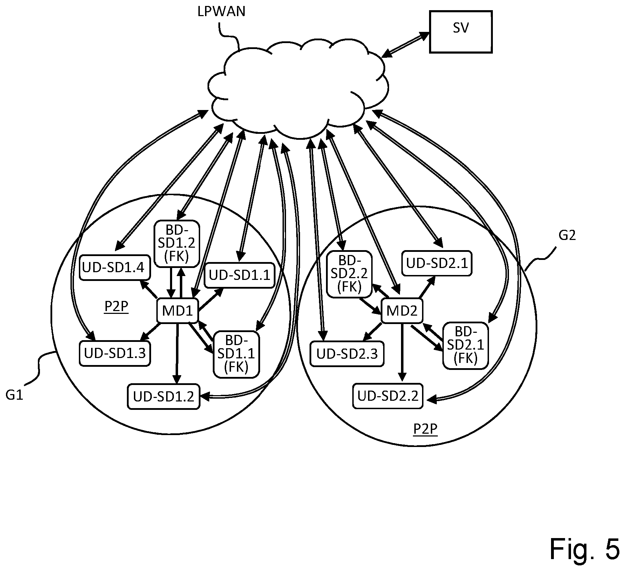

Figur 5 zeigt eine Skizze einer Netztopologie mit Teilnehmern und ihre unidirektionale und bidirektionale Kommunikation in einem übergeordneten Niedrigenergie-Weitverkehrsnetzwerk LPWAN und einem untergeordneten Peer-to-Peer-Netzwerk P2P.

In der erweiterten Netzstruktur sind bidirektionale Slave-Teilnehmer BD-SDn.m bezeichnet, vorhanden, die zur bidirektionalen Datenübertragung eingerichtet sind und damit auch eine Sendemöglichkeit erhalten.

Derartige bidirektionale Teilnehmer werden im Bereich SmartHome z.B. für Fensterkontakte FK genutzt. Damit können die regelmäßigen Abfragen eines P2P-Master-Teilnehmers MDn, im Beispiel ein Wandthermostat WTH) zur Synchronisation der P2P-Slave-Teilnehmer SDn.m, d.h. der unidirektional nur Daten empfangenden Teilnehmer UD-SDn.m und bidirektional Daten empfangenden und sendenden Teilnehmer BD-SDn.m, im Beispiel Fensterkontakte), genutzt werden. Das Eintreffen einer Master-Nachricht beim Slave-Teilnehmer wird als Zeitmarke für einen möglichen folgenden Sendevorgang genutzt.

Jeder bidirektionale Slave-Teilnehmer BD-SDn.m erhält hierzu eine eindeutige Identifikationsnummer ID, z.B. im Wertebereich von 1 bis 20 bei 20 Slave-Teilnehmern. Diese Identifikationsnummer ID dient zur Identifikation des Slave-Teilnehmers, wie bspw. eines Sensor-Devices, sowie zur Berechnung des Zeitslots, in welchem der Slave-Teilnehmer BD-SDn.m senden darf.

Der Beginn des Zeitfensters T_{Start} für eine Sendung eines Slave-Teilnehmers mit der Identifikationsnummer ID, d.h. die Verzögerungszeit, ergibt sich dabei nach folgender Formel: ${T}_{Start} \left(ID\right) = {ID * t}_{B} 10 ms + {t}_{D}$

Die absoluten Werte t_{B} für eine festgelegte Zeit einer Datenpaketübertragung von bspw. 10 ms und t_{D} für die Verzögerungszeit nach Empfang der Aufforderungsnachricht von dem P2P-Master-Teilnehmer MDn der Gruppe Gn von bspw. 15s sind hierbei von den Eigenschaften des P2P-Netzwerkes abhängig. Die angegebenen Werte dienen hier nur zur Verdeutlichung der Größenordnung bei Verwendung eines LoRa-basierten P2P-Netzwerks.

Die Sendezeit T_{Start} ist dabei die Zeit, die nach dem Empfangen der Sendung vom P2P-Master-Teilnehmer (im Beispiel Wandthermostat WTH) vergehen soll, bevor der bidirektionale Slave-Teilnehmer BD-SDn.m, wie z.B. ein Fensterkontakt oder sonstiger Sensor, antwortet, um seine Sensordaten als Nutzdaten zu übertragen.

Im Zuge des anfänglichen Anmeldevorgangs können die bidirektionalen Slave-Teilnehmer BD-SDn.m, die Senden dürfen, entsprechend konfiguriert werden.

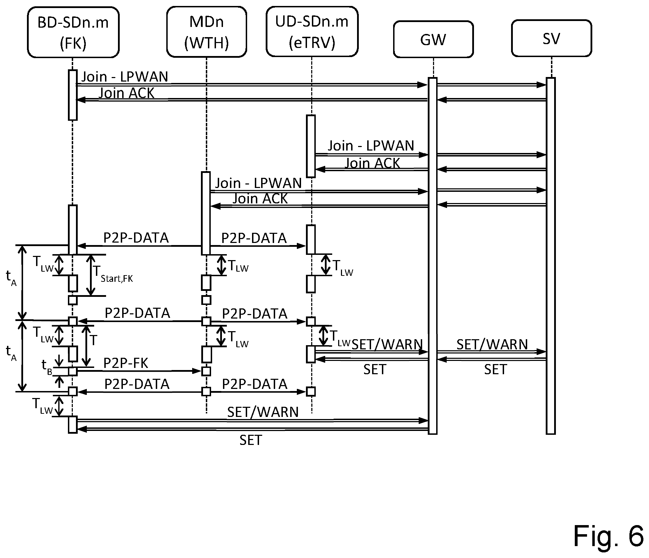

Figur 6 zeigt eine Skizze einer bidirektionalen Kommunikation zwischen Teilnehmern untereinander und einem Server in dem Netzwerk aus Figur 5.

Der Beginn des Zeitfensters T_{Start,FK} für eine Sendung des P2P-Master-Teilnehmers MDn (z.B. Wandthermostat WTH) oder eines bidirektionalen Slave-Teilnehmers BD-SDn.m (z.B. Fensterkontakt FK) mit der Identifikationsnummer ID, d.h. die Verzögerungszeit, ergibt sich dabei nach folgender Formel: ${T}_{Start , FK} \left(ID\right) = {ID * t}_{B} 10 ms + {t}_{D}$

Nach dem Aussenden eines P2P-Datenpakets wird eine Wartezeit T_{LW} vorgegeben, die sich bspw. als Zufallszahl aus einer vorgegebenen festen Zeit berechnet, bspw. zu T_{LW} = Random(2000)ms.

Das Zeitintervall t_{A} zwischen zwei aufeinanderfolgenden Nachrichten im P2P-Netzwerk mit P2P-Datenpaketen P2P-Data kann beispielsweise ein fester Wert sein. Das Zeitintervall kann sich bspw. berechnen zu t_{A} = 30000 ms+LFSR mit LFSR als Länge eines linear rückgekoppelten Schieberegisters, welches für das P2P-Datenpaket genutzt wird.

Die Skizze verdeutlicht die Kommunikation im hierarchischen Netzwerk bei Verwendung der bidirektionalen Kommunikation von Slave-Teilnehmern. Im dargestellten Beispiel soll ein Fensterkontakt FK als Slave-Teilnehmer BD-SDn.m Nachrichten im Peer-to-Peer-Netzwerk (P2P) an den P2P-Master-Teilnehmer MDn senden. Die Heizkörperthermostate eTRV sind hingegen Slave-Teilnehmer UD-SDn.m, die nur empfangen können:
1. Im ersten Schritt erfolgt die Anmeldung aller Teilnehmer im LoRaWAN-Netzwerk
2. Anschließend versendet der P2P-Master-Teilnehmer MDn (z.B. Wandthermostat WTH) eine Nachricht an die Sensor-Teilnehmer UD-SDn.m und BD-SDn.m (d.h. bspw. die Fensterkontakte FK, und Heizkörperthermostate eTRV)
3. Die bidirektionalen Slave-Teilnehmer BD-SDn.m, SDs und P2P-Master-Teilnehmer MDn können in der Zeit bis zum kommenden Sendevorgang des P2P-Master-Teilnehmers MDn eine Nachricht über das Standard-Niedrigenergie-Weitbereichsnetzwerk LPWAN (bspw. LoRaWAN) senden. Der bidirektionale Slave-Teilnehmer BD-SDn.m (z.B. Fensterkontakt FK) kann zusätzlich eine P2P-Nachricht zum Zeitpunkt T_{Start,FK} versenden. Der genaue Sendezeitpunkt T_{Start,F}(ID) wird durch die oben genannte Formel berechnet. Damit wird sichergestellt, dass keine Kollision der P2P-Datenpakete mit den LPWAN-Datenpaketen erfolgt.
4. Dargestellt wird im ersten Zyklus der Fall, dass keines der Slave-Teilnehmer BD-SDn.m sendet.
5. Dargestellt wird im zweiten Zyklus der Fall, das der unidirektionale Slave-Teilnehmer UD-SDn.m, wie bspw. der Heizkörperthermostat eTRV, über das Niedrigenergie-Weitbereichsnetzwerk LPWAN (bspw. LoRaWAN) sendet und ein bidirektionaler Slave-Teilnehmer BD-SDn.m, bspw. der Fensterkontakt FK, über das Peer-to-Peer-Netzwerk P2P sendet
6. Dargestellt wird im dritten Zyklus der Fall, das der bidirektionale Slave-Teilnehmer BD-SDn.m, in der Skizze Fensterkontakt FK, über das Niedrigenergie-Weitbereichsnetzwerk LPWAN (bspw. LoRaWAN) sendet.

Damit sind energiesparende effiziente unidirektionale und bidirektionale Übertragungen von Nutzdaten, wie insb. von Steuerdaten und Sensordaten, zur Überwachung und Steuerung verteilter technischer Einrichtungen möglich.

Die mit dem P2P-Master-Teilnehmer MDn einer Gruppe gesteuerte bidirektionale Kommunikation über das hierarchische Netzwerk hat folgende Vorteile:
- Es erfolgt eine signifikante Energieeinsparung, da bidirektionale Slave-Teilnehmer BD-SDn.m auch über das Peer-to-Peer-Netzwerk P2P an P2P-Master-Teilnehmer MDn senden können. Dies ist ansonsten nur über eine vergleichsweise energiehungrige Standard-Netzwerkverbindung möglich. Die sich ergebenden Energieeinsparungen gleichen denen, die bei einer Kommunikation vom Master-Teilnehmer MDn zum unidirektionalen oder bidirektionalen Slave-Teilnehmer SDn.m, UD-SDn.m, BD-SDn.m erzielbar sind.
- Das Sende-Verfahren für die bidirektionalen Slave-Teilnehmer BD-SDn.m kommt erneut ohne einen externen Server aus, der die Daten weiterleiten müsste. Dies führt zu hohen Energieeinsparungen.
- Durch die Nutzung von P2P-Master-Teilnehmern MDn (im Beispiel der Wandthermostaten WTH) als zentrale Empfangsstelle können Slave-Teilnehmer SDn.m (im Beispiel Heizkörperthermostat eTRV) informiert werden, ohne dass sie selbst zusätzliche Pakete ins LoRaWAN senden und empfangen müssen. Dies führt zu Energieeinsparungen durch nicht anfallende Kommunikation und dadurch das die Slave-Teilnehmer SDn.m im tiefen Power-Down-Mode verharren können.

Die Auslegung des Kommunikationsverfahrens kann darüber hinaus in einer optimierten Form erfolgen, wobei:
- Bidirektionale Sensor-Teilnehmer BD-SDn.m (z.B. Fensterkontakte) so eingerichtet sein können, dass sie nur dann senden, wenn sich eine Zustandsänderung (oder signifikante Werteänderung) gegenüber dem zuletzt gesendeten Wert ergeben hat (Send-On-Delta-Verfahren). Ob eine Änderung vorliegt, kann der jeweilige bidirektionale Sensor-Teilnehmer BD-SDn.m entscheiden, da der P2P-Master-Teilnehmer MDn in seinem Sende-Datenpaket an den Slave-Teilnehmer BD-SDn.m, den im Master bekannten Zustand (oder letzten Sendewert) an diesen bidirektionalen Slave-Teilnehmer BD-SDn.m überträgt. Nur für den Fall, dass sich die Zustandsinformationen (Wert) im P2P-Master-Teilnehmer MDn und bidirektionalem Slave-Teilnehmer BD-SDn.m unterscheiden (bzw. signifikant mit vorgegebenen Schwellwert unterscheiden), z.B. weil ein Fenster geöffnet oder geschlossen wurde oder eine vorhergehende Nachricht von einem Slave-Teilnehmer SDn.m verloren gegangen ist, erfolgt ein nachgelagerter Sendevorgang durch den bidirektionalen Slave-Teilnehmer BD-SDn.m (z.B. Fensterkontakt FK).
- sehr kurze Reaktionszeiten (max. 1 x 30 Sek) gegenüber der Verwendung eines Standardnetzwerks möglich werden. Eine vergleichbare Realisierung mittels eines Standard-Niedrigenergie-Weitbereichsnetzwerks (z.B. LoRaWAN) wäre technisch sehr komplex und energiehungrig.

## Patentansprüche

1. Verfahren zur drahtlosen Übertragung von Daten in einem mehrstufigen hierarchischen drahtlosen Netzwerk zwischen Teilnehmern des Netzwerkes, wobei ein übergeordnetes Niedrigenergie-Weitverkehrsnetz (LPWAN) zur Kommunikation mit einem anderen Teilnehmer, wie beispielsweise einem Server (SV), und ein untergeordnetes Peer-to-Peer-Netzwerk (P2P) zur Kommunikation von Teilnehmern des Netzwerkes untereinander vorhanden ist, **gekennzeichnet durch**
a) Anmelden aller Teilnehmer des Netzwerkes an dem übergeordneten Niedrigenergie-Weitverkehrsnetz (LPWAN), das durch Austausch von Schlüsseln zur verschlüsselten Datenkommunikation abgesichert ist;
b) Festlegen von Teilnehmern als P2P-Master-Teilnehmer (MDn) für jeweils einen Knoten des untergeordneten Peer-to-Peer-Netzwerkes (P2P) und von Teilnehmern, die als unidirektionale Slave-Teilnehmer (SDn.m, UD-SDn.m) oder bidirektionale Slave-Teilnehmer (BD-SDn.m) einem P2P-Master-Teilnehmer (MDn) zur Datenübertragung in dem Peer-to-Peer-Netzwerk (P2P) zugeordnet sind;
c) Senden einer Nachricht durch einen P2P-Master-Teilnehmer (MDn) an die ihm zugeordneten Slave-Teilnehmer (SDn.m, UD-SDn.m, BD-SDn.m) über das Peer-to-Peer-Netzwerk (P2P);
d) Senden einer Verwaltungsnachricht, insbesondere mit Netzwerkanmeldungsdaten, Einstellungsdaten oder Warnmitteilungen, von den Slave-Teilnehmern (SDn.m, UD-SDn.m, BD-SDn.m) über das übergeordnete Niedrigenergie-Weitverkehrsnetz (LPWAN) an den anderen Teilnehmer, wie insbesondere den Server (SV).

2. Verfahren nach Anspruch 1, **dadurch gekennzeichnet, dass** jeder bidirektionale Slave-Teilnehmer (BD-SDn.m) einer Gruppe (Gn), die einem P2P-Master-Teilnehmer (MDn) zugeordnet ist, eine eineindeutige Identifikationsnummer (ID) erhält.

3. Verfahren nach Anspruch 2, **gekennzeichnet durch:**
Senden von Nutzdaten durch die bidirektionalen Slave-Teilnehmer (BD-SDn.m) einer Gruppe (Gn) als Antwort auf die Abfragenachricht des P2P-Master-Teilnehmer (MDn) in einem Zeitfenster, das durch eine festgelegte Zeitverzögerung (t_{Start}) nach Empfang der Nachricht des P2P-Master-Teilnehmers (MDn) und durch eine von einer festgelegten Datenübertragungszeit (t_{B}) und der Identifikationsnummer (ID) abhängigen Zeit bestimmt wird, wobei die bidirektionalen Slave-Teilnehmer (BD-SDn.m) wahlweise untereinander Daten über das untergeordnete Peer-to-Peer-Netzwerk (P2P) austauschen können, Daten an unidirektionale Slave-Teilnehmer (UD-SDn.m) über das untergeordnete Peer-to-Peer-Netzwerk (P2P) übertragen können, Daten an einen anderen Teilnehmer durch Zwischenschaltung des P2P-Master-Teilnehmers (MDn) übertragen können, oder Daten direkt mit einem anderen Teilnehmer über das übergeordnete Niedrigenergie-Weitverkehrsnetz (LPWAN) austauschen können.

4. Verfahren nach Anspruch 3, **dadurch gekennzeichnet, dass** die bidirektionalen Slave-Teilnehmer (BD-SDn.m) nur dann Nutzdaten in ihrem Zeitfenster senden, wenn eine Änderung gegenüber den zuletzt gesendeten Nutzdaten vorliegt.

5. Verfahren nach Anspruch 4, **dadurch gekennzeichnet, dass** die Änderung der Nutzdaten vorliegt, wenn ein Sensorwert von dem zuletzt gesendeten Sensorwert mit einer vorgegebenen Differenz abweicht.

6. Verfahren nach einem der Ansprüche 2 oder 3, **dadurch gekennzeichnet, dass** der P2P-Master-Teilnehmer (MDn) mit seiner Nachricht im Schritt c) an die Slave-Teilnehmer (SDn.m, UD-SDn.m, BD-SDn.m) seiner Gruppe (Gn) die ihm bekannten, zuletzt gesendeten Nutzdaten der Slave-Teilnehmer (SDn.m, UD-SDn.m, BD-SDn.m) überträgt, wobei die Slave-Teilnehmer (SDn.m, UD-SDn.m, BD-SDn.m) die Änderung der Nutzdaten durch Vergleich der aktuellen Nutzdaten des Slave-Teilnehmers (SDn.m, UD-SDn.m, BD-SDn.m) mit den vom P2P-Master-Teilnehmer (MDn) empfangenden Nutzdaten ermittelt.

7. Verfahren nach einem der vorhergehenden Ansprüche, **dadurch gekennzeichnet, dass** die Datenübertragung zwischen dem P2P-Master-Teilnehmer (MD) und den Slave-Teilnehmern (SDn.m, UD-SDn.m, BD-SDn.m) einer Gruppe (Gn) des Peer-to-Peer-Netzwerkes (P2P) in einem ersten Zeitintervall über das untergeordnete Peer-to-Peer-Netzwerk (P2P) und die direkte Datenübertragung des P2P-Master-Teilnehmers (MD) bzw. der bidirektionalen Slave-Teilnehmer (BD-SDn.m) mit dem anderen Teilnehmer in einem zweiten Zeitintervall über das übergeordnete Niedrigenergie-Weitverkehrsnetz (LPWAN) erfolgt, wobei das erste Zeitintervall wesentlich kleiner als das zweite Zeitintervall ist.

8. Verfahren nach Anspruch 7, **dadurch gekennzeichnet, dass** das erste Zeitintervall kleiner als alle 60 Sekunden und das zweite Zeitintervall größer als alle 10 Stunden ist.

9. Verfahren nach einem der vorhergehenden Ansprüche, **dadurch gekennzeichnet, dass** die Datenübertragung der Slave-Teilnehmer (SDn.m, UD-SDn.m, BD-SDn.m) von Verwaltungsdaten, welche keine Nutzdaten, wie insbesondere Sensordaten und/oder Steuerungsdaten sind, über das übergeordnete Niedrigenergie-Weitverkehrsnetz (LPWAN) erfolgt.

10. Verfahren Anspruch 9, **dadurch gekennzeichnet, dass** Konfigurationsdaten als Verwaltungsdaten über das übergeordnete Niedrigenergie-Weitverkehrsnetz (LPWAN) übertragen werden.

11. Verfahren nach Anspruch 9 oder 10, **dadurch gekennzeichnet, dass** die Verwaltungsdaten über das übergeordnete Niedrigenergie-Weitverkehrsnetz (LPWAN) übertragen werden und im ersten Zeitintervall zu übertragende Nutzdaten über das untergeordnete Peer-to-Peer-Netzwerk (P2P) übertragen werden.

12. Verfahren nach einem der vorhergehenden Ansprüche, **dadurch gekennzeichnet, dass** das Niedrigenergie-Weitverkehrsnetz (LPWAN) ein LoRaWAN-Netzwerk ist.

13. Verfahren nach einem der vorhergehenden Ansprüche, **dadurch gekennzeichnet, dass** das im Schritt a) mit der Anmeldung Schlüssel zur Verschlüsselung der von den Teilnehmern übertragenen Datenpakete über das übergeordnete Niedrigenergie-Weitverkehrsnetz (LPWAN) an die sich anmeldenden Teilnehmer übertragen werden.

14. Funkkommunikationseinrichtung mit einer Vielzahl von verteilt angeordneten Teilnehmern, die zur drahtlosen Übertragung von Daten in einem mehrstufigen hierarchischen drahtlosen Netzwerk zwischen den Teilnehmern des Netzwerkes eingerichtet sind, wobei ein übergeordnetes Niedrigenergie-Weitverkehrsnetz (LPWAN) zur Kommunikation mit einem anderen Teilnehmer, wie beispielsweise einem Server (SV), und ein untergeordnetes Peer-to-Peer-Netzwerk (P2P) zur Kommunikation von Teilnehmern des Netzwerkes untereinander vorhanden ist, **dadurch gekennzeichnet, dass**
a) die Teilnehmer des Netzwerkes zum Anmelden an dem übergeordneten Niedrigenergie-Weitverkehrsnetz (LPWAN) bei dem anderen Teilnehmer eingerichtet sind, das durch Austausch von Schlüsseln zur verschlüsselten Datenkommunikation abgesichert ist;
b) Teilnehmer als P2P-Master-Teilnehmer (MDn) für jeweils einen Knoten des untergeordneten Peer-to-Peer-Netzwerkes (P2P) festgelegt sind, und Teilnehmer als unidirektionale Slave-Teilnehmer (UD-SDn.m) oder bidirektionale Slave-Teilnehmer (BD-SDn.m) einem P2P-Master-Teilnehmer (MDn) zur Datenübertragung in dem Peer-to-Peer-Netzwerk (P2P) zugeordnet sind; und
c) die P2P-Master-Teilnehmer (MDn) zum Senden einer Nachricht an die dem jeweiligen P2P-Master-Teilnehmer (MDn) zugeordneten Slave-Teilnehmer (SDn.m, DU-SDn.m, BD-SDn.m) über das Peer-to-Peer-Netzwerk (P2P) eingerichtet sind.

15. Funkkommunikationseinrichtung nach Anspruch 14, **dadurch gekennzeichnet, dass** jedem bidirektionalem Slave-Teilnehmer (BD-SDn.m) einer Gruppe (Gn), die einem P2P-Master-Teilnehmer (MDn) zugeordnet ist, eine eineindeutige Identifikationsnummer (ID) zugeordnet ist.

16. Funkkommunikationseinrichtung nach Anspruch 15, **dadurch gekennzeichnet, dass** die bidirektionalen Slave-Teilnehmer (BD-SDn.m) einer Gruppe (Gn) zum Senden von Daten als Antwort auf die Nachricht des P2P-Master-Teilnehmers (MDn) der Gruppe (Gn) in einem Zeitfenster, das durch eine festgelegte Zeitverzögerung (t_{Start}) nach Empfang der Nachricht des P2P-Master-Teilnehmers (MDn) und durch eine von einer festgelegten Datenübertragungszeit (t_{B}) und der Identifikationsnummer (ID) abhängigen Zeit bestimmt wird, eingerichtet sind, wobei die bidirektionalen Slave-Teilnehmer (BD-SDn.m) eingerichtet sind, um wahlweise untereinander Daten über das untergeordnete Peer-to-Peer-Netzwerk (P2P) austauschen können, Daten an unidirektionale Slave-Teilnehmer (UD-SDn.m) über das untergeordnete Peer-to-Peer-Netzwerk (P2P) übertragen können, Daten an einen anderen Teilnehmer durch Zwischenschaltung des P2P-Master-Teilnehmers (MDn) übertragen können, oder Daten direkt mit einem anderen Teilnehmer über das übergeordnete Niedrigenergie-Weitverkehrsnetz (LPWAN) austauschen können.

17. Funkkommunikationseinrichtung nach einem der Ansprüche 14 bis 16, **dadurch gekennzeichnet, dass** die Teilnehmer zur Durchführung des Verfahrens nach einem der Ansprüche 1 bis 13 eingerichtet sind.

18. Funkkommunikationseinrichtung nach einem der Ansprüche 14 bis 17, **dadurch gekennzeichnet, dass** mindestens ein Gateway-Teilnehmer (GW), beispielsweise ein Repeater, in den direkten Kommunikationspfad mit einem anderen Teilnehmer, wie bspw. einem Server (SV), über das übergeordnete Niedrigenergie-Weitverkehrsnetz (LPWAN) zwischengeschaltet ist, wobei der Gateway-Teilnehmer (GW) zur bidirektionalen Weiterleitung von Daten zwischen den Teilnehmern und dem anderen Teilnehmer eingerichtet ist.

19. Funkkommunikationseinrichtung nach einem der Ansprüche 14 bis 18, **dadurch gekennzeichnet, dass** die Teilnehmer zur Kommunikation nach dem LoRaWAN-Standard als Niedrigenergie-Weitverkehrsnetz (LPWAN) eingerichtet sind.
